**Europäisches Patentamt**

**European Patent Office**

**Office européen des brevets**

(11) Veröffentlichungsnummer: **0 119 989**
A1

## EUROPÄISCHE PATENTANMELDUNG

(21) Anmeldenummer: **84890048.6**

(51) Int. Cl.³: **F 16 D 3/20**

(22) Anmeldetag: **14.03.84**

(30) Priorität: **18.03.83 AT 965/83**

(71) Anmelder: **Hufnagl, Karl, Austrasse 19, A-3442 Langenrohr (AT)**

(43) Veröffentlichungstag der Anmeldung: **26.09.84 Patentblatt 84/39**

(72) Erfinder: **Hufnagl, Karl, Austrasse 19, A-3442 Langenrohr (AT)**

(84) Benannte Vertragsstaaten: **BE CH DE FR GB IT LI LU NL SE**

(74) Vertreter: **Müllner, Erwin, Patentanwälte Dr. Erwin Müllner, Dipl.-Ing. Armin Häupl, Dipl.-Ing. Werner Katschinka Weihburggasse 9, A-1010 Wien (AT)**

(54) **Gelenk zur Übertragung eines Drehmoments.**

(57) Das Gelenk zur Übertragung eines Drehmoments zwischen einem Antrieb und einer Arbeitsmaschine besteht aus einer Kugel (2) mit zwei in zueinander im rechten Winkel stehenden, den Kugelmittelpunkt umfassenden Ebenen angeordneten Ringnuten (5, 6) und einer mehr als die Hälfte der Kugel (2) übergreifenden Kugelgelenkpfanne (3) mit vier radial zum Kugelmittelpunkt gerichteten, in die Ringnuten (5, 6) eingreifenden paarweise diametral angeordneten Zapfen (8, 9, 10, 11) sowie mit je einer mit der Kugel (2) und mit der Kugelgelenkpfanne (3) verbundenen Welle (1, 2). Insbesondere sind die Zapfen (8, 9, 10, 11) in Gleitschlitten (12, 13, 14, 15) drehbar gelagert und die Gleitschlitten in den Ringnuten (5, 6) verschiebbar. Die Gleitschlitten (12, 13, 14, 15) können auf Zapfen (8, 9, 10, 11) gelagert sein, die die Kugelgelenkpfanne (3) in Form von Achsen diametral durchsetzen und die Ringnuten (5, 6) können als Schlitze ausgebildet sein, die die Kugel (2) durchdringen.

- 1 -

## Gelenk zur Übertragung eines Drehmoments

Die Erfindung betrifft ein Gelenk zur Übertragung eines Drehmoments zwischen einem Antrieb, insbesondere einer Zapfwelle und einer Arbeitsmaschine od.dgl. Es sind Kardangelenke bekannt, die im Fahrzeugbau, bei Maschinen und in großem Umfang in der Landwirtschaft zur Kraftübertragung zwischen der Zapfwelle eines Schleppers und einer Arbeitsmaschine eingesetzt werden. Meist kommen Gelenkwellen zum Einsatz, die teleskopartig zusammenschiebbar sind und an den beiden Enden Kardangelenke aufweisen. Erst dadurch ist es möglich, sowohl Winkelals auch Abstandsunterschiede bei laufendem Antrieb kraftschlüssig zu übrbrücken.

Kardangelenke weisen zwei gegeneinander gerichtete zweischenkelige Gabeln auf, die um 90° zueinander verdreht und ineinander geschoben sind, wobei zwischen den Gabelschenkeln ein Kreuzstück jeweils drehbar gelagert ist, das die beiden Gabeln miteinander verbindet. Wenn die antreibende und die abtreibende Welle einen stumpfen Winkel zueinander einschließen,
dann bringt es der geometrische Aufbau des Kardangelenkes mit
sich, daß die Achse, um die die beiden durch das Gelenk verbundenen Wellen aus der Strecklage in die Winkellage gebracht wurden, nicht mit beiden Achsen des Kreuzstückes zusammenfallen
kann. Es ergeben sich aus kinematischen Gründen Schwingungen
auf der Abtriebsseite. Darüber hinaus ist die ungleichmäßige
Massenverteilung beim Kardangelenk ungünstig und verursacht
insbesondere bei größeren Abweichungen aus der Strecklage gefährliche Schwingungen.

Die Erfindung zielt darauf ab, die Nachteile bekannter Ausführungen zu vermeiden. Dies wird dadurch erreicht, daß eine Kugel, gegebenenfalls Hohlkugel, mit zwei Ringnuten, gegebenenfalls Schlitzen, in zueinander im rechten Winkel stehenden, den
Kugelmittelpunkt umfassenden Ebenen vorgesehen ist, daß eine
mehr als die Hälfte der Kugel übergreifende Kugelgelenkpfanne
vier radial zum Kugelmittelpunkt gerichtete, in die Ringnuten
oder Schlitze eingreifende, paarweise diametral angeordnete
Zapfen bzw. zwei die Schlitze diametral durchsetzende Achsen
aufweist und daß mit der Kugel und mit der Kugelgelenkpfanne je
eine Welle zum Antrieb bzw. zur Arbeitsmaschine verbunden ist.
Durch den rotationssymmetrischen Aufbau des Gelenkes ist die
Schwingungsneigung geringer als bei bekannten Ausführungen.
Ferner ergeben sich Vorteile bei der Übertragung des Drehmomentes, da zwei Paare von einander diametral gegenüberliegenden
Zapfen z.B. abtriebsseitig zur Kraftübertragung vorgesehen
sind, von welchen bei der Drehung immer jeweils ein Paar eine
günstige Übertragungsposition einnimmt. Dies ist bei einem bekannten Kardangelenk nicht der Fall. Erfindungsgemäß können Ungleichförmigkeiten in der Winkelgeschwindigkeit auf der Abtriebsseite auch bei großen Abwinkelungen gering gehalten werden. Eine besonders vorteilhafte Ausbildungsform der Erfindung
besteht darin, daß die Zapfen gegebenenfalls mittels Wälzlagern
in Gleitschlitten drehbar gelagert und die Gleitschlitten in
den Ringnuten verschiebbar sind. Diese Ausführung ergibt eine Weitwinkelwelle, die beispielsweise eine Kraftübertragung um einen Winkel von 30$^{\circ}$ ermöglicht. Indem die Zapfen in Gleitschlitten in den Ringnuten gelagert sind, verringert sich der Verschleiß durch die Flächenpressung gegenüber der Linienberührung bei Zapfen, so daß das Gelenk auch im Weitwinkelbetrieb über sehr lange Zeit voll einsatzbereit bleibt. In der Praxis hat sich gezeigt, daß die erfindungsgemäße Ausführung infolge der parallelen Gleitflächen und der exakteren Führung einen ruhigeren Lauf des Gelenkes noch bei großen Winkeln ermöglicht. Eine Verdopplung des Erfindungsgedankens, die eine weitere Verbesserung ermöglicht, führt zu vier Ringnuten, die in um je 45$^{\circ}$ zueinander versetzten Ebenen liegen, welche eine gemeinsame Schnittlinie in Verlängerung der mit der Kugel in Verbindung stehenden Wellenachse haben. Sinngemäß verfügt die Kugelgelenkpfanne in ihrem Inneren über 8 radial ausgerichtete Zapfen. Schließlich ist es in weiterer Abwandlung des Erfindungsgedankens auch möglich, die Tiefe der Ringnuten so zu vergrößern, daß sich dem gesamten Querschnitt der Kugel durchsetzende Schlitze ergeben. Um eine Verformung der Kugel unter Last zu verhindern, kann an dem der Welle abgewandten Kreuzungspunkt der Schlitze eine starre Verbindung der vier Kugelviertel vorgesehen sein. Die paarweise einander gegenüber liegenden Zapfen können zu je einer Achse zusammenfallen, so daß sich ein Kreuz ergibt, das im Gegensatz zu bekannten Kardangelenken mit seinen vier Enden fest mit der Kugelgelenkpfanne verbunden ist.

Schließlich kann die Kugel auch als Hohlkugel ausgebildet sein, wobei die Zapfen gegebenenfalls die Wandstärke der Hohlkugel im Inneren überragen.

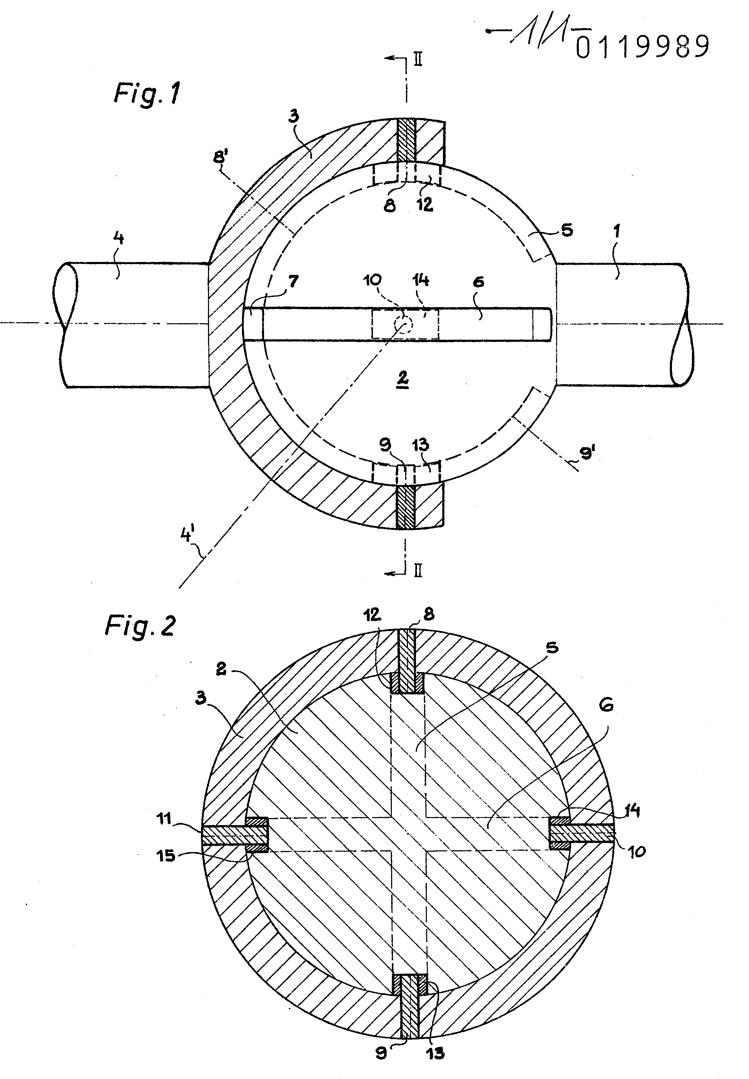

Ein Ausführungsbeispiel des Erfindungsgedankens ist in der Zeichnung dargestellt. Fig.1 zeigt ein Gelenk gemäß der Erfindung teilweise im Querschnitt und Fig.2 einen Schnitt nach der Linie II-II in Fig.1.

Auf einer Welle 1 ist eine Kugel 2 fest angeordnet, die von

0119989

einer Kugelgelenkpfanne 3 um mehr als die Hälfte übergriffen
wird. Mit der Kugelgelenkpfanne 3 ist eine Welle 4 fest verbunden. Die Darstellung zeigt die Kugelgelenkpfanne 3 in vereinfachter Weise als einstückigen Baukörper. Zur praktischen
Herstellung ist eine Teilung etwa in zwei Halbschalen oder
längs des größten Durchmessers quer zur Achse der Welle 4 erforderlich.

In der Kugel 2 sind zwei nicht geschlossene Ringnuten 5, 6 vorgesehen, die in zwei zueinander im rechten Winkel liegenden
Ebenen, welche jeweils den Kugelmittelpunkt durchsetzen, angeordnet sein. An Stelle des Kreuzungspunktes 7 (Fig.1) der Nuten
5, 6 können für den Fall der hohlen Ausbildung der Kugel sowie
der Ausbildung von durchgehenden Schlitzen an Stelle der Nuten
5, 6 aus Gründen der Festigkeit die Schalenteile der Kugel verbunden sein.

Aus der Kugelgelenkpfanne 3 ragen in radialer Richtung zum Kugelmittelpunkt vier Zapfen 8, 9, 10, 11 vor. Die Zapfen liegen
einander paarweise diametral gegenüber und greifen jeweils mit
ihrem vorragenden Teil in eine der Ringnuten ein. Die Zapfen
können zylindrisch ausgebildet sein und einen Durchmesser haben,
der der Nutbreite der Ringnuten 5, 6 entspricht. Als vorteilhaft
hat es sich erwiesen, wenn gemäß Fig.1 und 2 auf die Zapfen
Gleitschlitten 12, 13, 14, 15 aufgesetzt und in ihren Abmessungen der Nut angepaßt sind. Zwischen den Zapfen und den Gleitschlitten können Wälzlager (z.B. Nadellager) vorgesehen sein.
Zur Reibungsverminderung zwischen den Gleitschlitten und der
Nut kann eine Kunststoffbeschichtung aufgebracht werden. Auch
Rollen an den Schlitten tragen zur Reibungsverminderung bei.
Zur Vermeidung von Verklemmungen der Gleitschlitten ist es
zweckmäßig, die Kanten der Gleitschlitten abzurunden oder abzuschrägen.

Wird die Welle 1 angetrieben, dann erfolgt die Übertragung des

0119989

Drehmoments über die Kugel 2, die Gleitschlitten 12, 13, 14, 15 in den Nuten 5, 6, die Zapfen 8, 9, 10, 11 auf die Kugelgelenkpfanne 3 und die abtreibende Welle 4.

Bei einer Abwinkelung, wie sie durch die Wellenachse 4' gegenüber der Welle 1 dargestellt ist, liegen die Zapfen 8, 9 in den Positionen 8', 9'. Zur Übertragung des Drehmomentes liegen diese Zapfen ungünstig, hingegen bleiben die Zapfen 10, 11 weiterhin in ihren optimalen Lagen, so daß sich letztlich bei jeder Abwinkelung hinsichtlich Gleichförmigkeit des Drehmoments und Schwingungsverhalten abtriebsseitig gute Resultate einstellen.

0119989

Patentansprüche:

1. Gelenk zur Übertragung eines Drehmoments zwischen einem Antrieb, insbesondere einer Zapfwelle und einer Arbeitsmaschine od.dgl., dadurch gekennzeichnet, daß eine Kugel (2), gegebenenfalls Hohlkugel, mit zwei Ringnuten (5, 6), gegebenenfalls Schlitzen, in zueinander im rechten Winkel stehenden, den Kugelmittelpunkt umfassenden Ebenen vorgesehen ist, daß eine mehr als die Hälfte der Kugel (2) übergreifende Kugelgelenkpfanne (3) vier radial zum Kugelmittelpunkt gerichtete, in die Ringnuten (5, 6) oder Schlitze eingreifende, paarweise diametral angeordnete Zapfen (8, 9, 10, 11) bzw. zwei die Schlitze diametral durchsetzende Achsen aufweist und daß mit der Kugel (2) und mit der Kugelgelenkpfanne (3) je eine Welle (1, 2) zum Antrieb bzw. zur Arbeitsmaschine verbunden ist.

2. Gelenk nach Anspruch 1, dadurch gekennzeichnet, daß die Zapfen (8, 9, 10, 11) gegebenenfalls mittels Wälzlagern in Gleitschlitten (12, 13, 14, 15) drehbar gelagert und die Gleitschlitten in den Ringnuten (5, 6) verschiebbar sind.

Fig.1

Fig.2

0119989

**Europäisches Patentamt**

**EUROPÄISCHER RECHERCHENBERICHT**

0119989

Nummer der Anmeldung

EP 84 89 0048

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-2 625 018 (DUNN) <br> * Insgesamt * | 1,2 | F 16 D 3/20 |
| X | US-A-2 672 740 (DUNN) <br> * Insgesamt * | 1 | |
| Y | | 3 | |
| X | FR-E- 28 511 (LE ROUX) <br> * Insgesamt * | 1 | |
| X | FR-A-2 271 444 (GLAENZER SPICER) <br> * Seiten 10,11; Figuren 8-10 * | 1 | |
| Y | FR-A- 744 111 (WEBLEY & SCOTT) <br> * Insgesamt * | 2 | **RECHERCHIERTE SACHGEBIETE (Int. Cl. 3)** <br><br> F 16 D 3/00 |
| A | GB-A- 21 570 (FETZER)(A.D.1909) | | |
| A | US-A-2 526 105 (ADAMS) | | |

Der vorliegende Recherchenbericht wurde für alle Patentansprüche erstellt.

| Recherchenort <br> DEN HAAG | Abschlußdatum der Recherche <br> 11-05-1984 | Prüfer <br> BALDWIN D.R. |
|---|---|---|